(19) **Europäisches Patentamt / European Patent Office / Office européen des brevets**

(11) **EP 4 014 076 B1**

(12) **EUROPEAN PATENT SPECIFICATION**

(45) Date of publication and mention
of the grant of the patent:
**24.12.2025  Bulletin 2025/52**

(21) Application number: **21710193.0**

(22) Date of filing: **17.02.2021**

(51) International Patent Classification (IPC):
**G02B 5/18** (2006.01)    **F21V 8/00** (2006.01)
**G02B 6/293** (2006.01)    **G02B 27/01** (2006.01)

(52) Cooperative Patent Classification (CPC):
**G02B 27/0172;** G02B 2027/0112; G02B 2027/0174;
G02B 2027/0178

(86) International application number:
**PCT/EP2021/053822**

(87) International publication number:
**WO 2021/175587 (10.09.2021 Gazette 2021/36)**

(54) **FULL COLOR DISPLAY SYSTEMS AND CALIBRATION METHODS THEREOF**

VOLLFARBENANZEIGESYSTEME UND KALIBRIERUNGSVERFAHREN DAFÜR

SYSTÈMES D'AFFICHAGE EN PLEINES COULEURS ET LEURS PROCÉDÉS D'ÉTALONNAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2020  EP 20161375**

(43) Date of publication of application:
**22.06.2022  Bulletin 2022/25**

(73) Proprietor: **Micledi Microdisplays BV**
**3001 Leuven (BE)**

(72) Inventors:
• **MITYASHIN, Alexander**
**3001 Leuven (BE)**

• **STEUDEL, Soeren**
**3050 Oud-Heverlee (BE)**
• **VERTOMMEN, Johan**
**3220 Holsbeek (BE)**

(74) Representative: **Körfer, Thomas**
**Mitscherlich PartmbB**
**Patent- und Rechtsanwälte**
**Karlstraße 7**
**80333 München (DE)**

(56) References cited:
**EP-A1- 2 887 128        WO-A1-2018/175653**
**US-A1- 2015 234 477    US-A1- 2017 122 725**
**US-A1- 2017 299 860    US-A1- 2018 017 801**
**US-A1- 2018 120 559    US-A1- 2019 227 319**
**US-A1- 2020 073 119**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to full color display systems realized with separate RGB display dies and methods to calibrate misalignment of the separate RGB display dies, especially to integrate the RGB display dies onto an optical combiner for augmented reality glasses.

Generally, a full color high-resolution display can be realized by fabricating separate mono color displays for the three separate colors, namely red, green and blue, with different compound semiconductor and by overlaying the separate displays with an optical combiner. Such a technique can be effectively implemented for projection display systems, augmented reality display systems, virtual reality display systems and the like.

For example, the document US 10,032,757 B2 discloses a projection display system with separate light emitting diode display panels, where the corresponding emissions are combined on a beam combiner. In this context, the beam combiner includes one or more dichroic mirrors and one or more prisms. However, the foregoing arrangement is limited by size constrains, e.g., the size of the beam combiner, especially for augmented reality glasses. Moreover, in practice, there will be misalignment due to process and equipment limitations, especially between 10-100 micrometers in the packaging and placement process of the separate displays with the combiner. This will have a significant impact on the image quality and color mixing.

US 2017/0299860 A1 relates to a near eye or heads up display system that includes a scan beam projector engine, an optical waveguide, and an exit pupil expander coupled between said scan beam projector engine and the waveguide. Hence, this document utilizes a single utility for projecting RGB lights.

US 2018/0017801 A1 relates to a display apparatus that includes at least one LED display unit including a plurality of LED display panels outputting image lights, a light guide unit including a plurality of in-coupling zones and a single out-coupling zone, a plurality of in-coupling holographic optical elements arranged in the in-coupling zones and a plurality of out-coupling holographic optical elements arranged in the out-coupling zone. This document also discloses respective collimating lenses for the respective LED display panels of the LED display. In a further embodiment, this document discloses that the display unit includes a single CMOS backplane to drive the LED cells. Therein, a common cell is formed on the single CMOS backplane, particularly in each of the CMOS cell regions, where the respective common cells are electrically connected to the respective LED display panels.

EP 2 887 128 A1 relates to a system and method for providing uniform color distribution of light emitted from a light source to an eye box in a near eye display. Particularly, this document discloses a light source including a light engine such as a micro-display that projects an image with different wavelength bands.

WO 2018/175653 A1 relates to a display device that comprises, one or more light emitters configured to emit light and a first waveguide disposed with respect to said one or more light emitters to receive light from said one or more light emitters.

US 2019/0227319 A1 discloses an apparatus that includes, a plurality of monochromatic emitter arrays, where each of the plurality of monochromatic emitter arrays has a plurality of emitters disposed in a two-dimensional configuration and emits a monochromatic image of a corresponding color.

US 2015/0234477 A1 shows similar state of the art.

Accordingly, the object of the invention is to provide a method for calibrating the said display systems, which can address the aforementioned limitations.

The object is solved by the features of the independent claim. Additional features of the invention are provided in the dependent claim.

According to an aspect not according to the claimed invention, a display system is provided. The display system comprises a first display die configured to emit light of a first color, a second display die configured to emit light of a second color and a third display die configured to emit light of a third color. In addition, the display system further comprises a lens system and an optical waveguide system, wherein the optical waveguide system comprises a first grating portion configured to couple in an incident light to the optical waveguide system and a second grating portion configured to couple out a transmitting light from the optical waveguide system.

Furthermore, the first display die, the second display die and the third display die are arranged in one package. Moreover, the lens system is arranged in between the package and the optical waveguide system, configured to collimate the light of first color, the light of second color and the light of third color onto the first grating portion of the optical waveguide system. Therefore, a display system is provided with a focal implementation for near eye displays, **e.g.,** augmented reality glasses. Three separate display dies emit images with respective colors, i.e., red, green and blue, and are collimated with a common lens system. The collimated beams traverse through a waveguide system (total internal reflection) with localized grating portions acting as in and out couplers for the beams.

Preferably, the first grating portion is configured to couple in the light of first color, the light of second color and the light of third color to the optical waveguide system and the second grating portion is configured to couple out the light of first color, the light of second color and the light of third color from the optical waveguide system. Thus, the three mono color beams emitted from the three separate displays are collimated by the lens system and are coupled into the waveguide system by the first grating portion. When the beams hit the second grating portion, the beams are diffracted out of the waveguide system.

Preferably and advantageously, the optical waveguide system comprises at least three separate waveguides corresponding to the light of first color, the light of second color and the light of third color, whereby each separate waveguide comprises a first grating portion and a second grating portion in order to couple in and couple out the respective light. In a more preferred implementation, the structure of the first grating portion and the structure of the second grating portion are the same for each waveguide. Especially, the grating angle and grating spacing for the first and second grating portions of a waveguide are identical. In addition, the second grating portions of the separate waveguides for coupling out the respective light are preferably overlaid at the same location with respect to each other. However, the first grating portions of the separate waveguides for coupling in the respective light can be arranged either in an overlaying fashion or in respective separate locations, which correspond to the incidence locations for the collimated beam of lights on the waveguides.

Advantageously, the first display die, the second display die and the third display die are light emitting dies, preferably comprising arrays of microscopic light emitting diodes forming the individual pixel elements. In this context, the first display die, the second display die and the third display die comprise a driver circuit array including a plurality of pixel driver circuits, each being coupled to the individual pixel elements. This allows for micro-level fabrication of display emitter that can achieve a targeted pixel pitch between 1-5 micrometers for micro-LED displays on CMOS, especially for augmented or virtual reality applications.

According to another aspect not according to the claimed invention, another display system is provided. The display system comprises a first display die configured to emit light of a first color, a second display die configured to emit light of a second color and a third display die configured to emit light of a third color. The display system further comprises a first lens, a second lens and a third lens. Additionally, the display system comprises an optical waveguide system comprising a first grating portion configured to couple in an incident light to the optical waveguide system and a second grating portion configured to couple out a transmitting light from the optical waveguide system.

Furthermore, the first display die, the second display die and the third display die are arranged in three separate packages. Moreover, the first lens, the second lens and the third lens are arranged in between the packages and the optical waveguide system, whereby the first lens is configured to collimate the light of first color, the second lens is configured to collimate the light of second color and the third lens is configured to collimate the light of third color onto the first grating portion of the optical waveguide system.

Therefore, a display system is provided with a focal implementation for near eye displays, e.g., augmented reality glasses. Three separate display dies emit images with respective colors, i.e., red, green and blue, and are collimated with a respective lens. Moreover, the dies are arranged on three separate packages. This advantageously allows for a relaxed arrangement for the dies with respect to the waveguide system, especially regarding the spatial placement of the dies. The collimated beams traverse through the waveguide system with localized grating portions acting as in and out couplers for the beams.

It is to be noted, the first lens, the second lens, and the third lens may also be referred as collimation optics corresponding to the three separate display dies, namely the first display die, the second display die, and the third display die, respectively. In this regard, said collimation optics may comprise multiple lens and/or layered optics, thereby operating as respective lens systems for the respective display dies.

Preferably, the first grating portion is configured to couple in the light of first color, the light of second color and the light of third color to the optical waveguide system and the second grating portion is configured to couple out the light of first color, the light of second color and the light of third color from the optical waveguide system. Thus, the three mono color beams emitted from the three separate displays are collimated by the respective lenses and are coupled into the waveguide system by the first grating portion. When the beams hit the second grating portion, the beams are diffracted out of the waveguide system.

Preferably and advantageously, the optical waveguide system comprises at least three separate waveguides corresponding to the light of first color, the light of second color and the light of third color, whereby each separate waveguide comprises a first grating portion and a second grating portion in order to couple in and couple out the respective light. This allows for an effective beam combination that can be realized on augmented or virtual reality glasses.

Advantageously, the first display die, the second display die and the third display die are light emitting dies, preferably comprising arrays of microscopic light emitting diodes forming the individual pixel elements. In this context, the first display die, the second display die and the third display die comprise a driver circuit array including a plurality of pixel driver circuits, each being coupled to the individual pixel elements. This allows for micro-level fabrication of display emitter that can achieve a targeted pixel pitch between 1-5 micrometers for micro-LED displays on CMOS, especially for augmented or virtual reality applications.

According to the invention, a method for calibrating a display system with a first display die, a second display die and a third display die with a driver circuit array is provided. The method comprises the step of optically measuring offsets along at least two axes between the first display die, the second display die and the third display die by applying calibration images. The method further comprises the step of cropping an actual content to be displayed on the first display die, the second display die and the third display die by a scale based on the measured offsets, thereby generating respective modified contents.

Moreover, the method comprises the step of offsetting the modified contents corresponding to the measured offsets. Therefore, a calibration method is provided, especially concerning the integration of a micro-LED display onto an optical waveguide for augmented reality glasses. Advantageously, the calibration method can be realized as a software implementation in the external graphic and computation hardware without any significant alteration in the driver circuit or display design.

Preferably, the method comprises the step of optically measuring transversal and rotational offsets between the first display die, the second display die and the third display die. Furthermore, the method comprises the step of offsetting the modified contents corresponding to the measured transversal and rotational offsets. This allows for a comprehensive calibration of misalignments between the separate display dies, especially after the assembly process.

According to an aspect according to the invention, another method for calibrating a display system with a first display die, a second display die and a third display die with a driver circuit array is provided. The method comprises the step of estimating a misalignment accuracy for assembling the first display die, the second display die and the third display die with respect to an optical waveguide system. The method further comprises the step of adding additional addressable pixels along the two axes on the first display die, the second display die and the third display die based on the estimated misalignment accuracy. Furthermore, the method comprises the step of optically measuring offsets along at least two axes between the first display die, the second display die and the third display die by applying calibration images.

Moreover, the method comprises the step of shifting an actual content to be displayed on the first display die, the second display die and the third display die corresponding to the measured offsets. Therefore, a calibration method is provided, especially concerning the integration of a micro-LED display onto an optical waveguide for augmented reality glasses. In this regard, the misalignment accuracy of the assembly process can be defined as an expected misalignment accuracy of the assembly process between the display dies and of the display package or module on the optical waveguide that may lead to an offset. Advantageously, the calibration method can be performed within the display module comprising the separate display dies.

Further advantageously, the method comprises the step of optically measuring transversal and rotational offsets between the first display die, the second display die and the third display die. Furthermore, the method comprises the step of offsetting the actual content corresponding to the measured transversal and rotational offsets. This allows for a comprehensive calibration of misalignments between the separate display dies, especially after the assembly process.

Further advantageously, the method comprises the step of modifying the driver circuit array with respect to the additional addressable pixels along the two axes on the first display die, the second display die and the third display die. In addition, the method further comprises the step of controlling the driver circuit array in order to shift the actual content to be displayed on the first display die, the second display die and the third display die corresponding to the measured offsets. Therefore, the pixels of the display dies that are not in use after the calibration process advantageously provides no refresh, i.e. content, from the driver circuit array, especially from a gate driver and a source driver of the driver circuit array. Advantageously, by shifting the actual content along the axes of the display dies the non-addressable pixels floats and are effectively deactivated in order to save unwanted energy dissipation.

Further advantageously, the method comprises the step of providing power-gating means to the driver circuit array for deactivating at least a column and/or a row of pixels along the two axes on the first display die, the second display die and the third display die. Therefore, in addition or as an alternative to the content shifting by the driver circuit array, the driver circuit array comprises power gating means, e.g. a power-gate transistor between the gate driver and/or the source driver, that deactivates a full row and/or column along the axes of the display dies. Advantageously, no unwanted row/column capacitances are required to be charged and therefore effectively saves unwanted energy dissipation.

Exemplary embodiments of the invention are now further explained with respect to the drawings by way of example only, and not for limitation. In the following, parts of the description and drawings referring to embodiments, which are not covered by the claims, are not presented as embodiments of the invention, but as examples useful for understanding the invention. In the drawings:

Fig. 1      shows a general working principle of an augmented reality optics by way of an example;

Fig. 2A      shows an example of a display system not according to the claimed invention;

Fig. 2B      shows the display system of Fig. 2A in detail;

Fig. 3      shows an exemplary arrangement of the display dies on a single package not according to the claimed invention;

Fig. 4A      shows a further example of the display system not according to the claimed invention;

Fig. 4B      shows the display system of Fig. 4A in detail;

Fig. 5A    shows a further example of the display system not according to the claimed invention;

Fig. 5B    shows the display system of Fig. 5A in detail;

Fig. 6    shows an exemplary arrangement of the display dies on separate packages;

Fig. 7    shows a flow chart of exemplary calibration sequences to determine misalignments according to the invention;

Fig. 8    shows exemplary calibration patterns to determine misalignments according to the invention;

Fig. 9    shows a flow chart of an exemplary embodiment of the method according to the invention;

Fig. 10    shows an exemplary active matrix addressing of display according to the invention;

Fig. 11    shows a further flow chart for calibration by way of an example not according to the claimed invention; and

Fig. 12    shows a further active matrix addressing of display by way of an example not according to the claimed invention.

Reference will now be made in detail to the embodiments of the present invention, examples of which are illustrated in the accompanying drawings. However, the following embodiments of the present invention may be variously modified and the range of the present invention is not limited by the following embodiments.

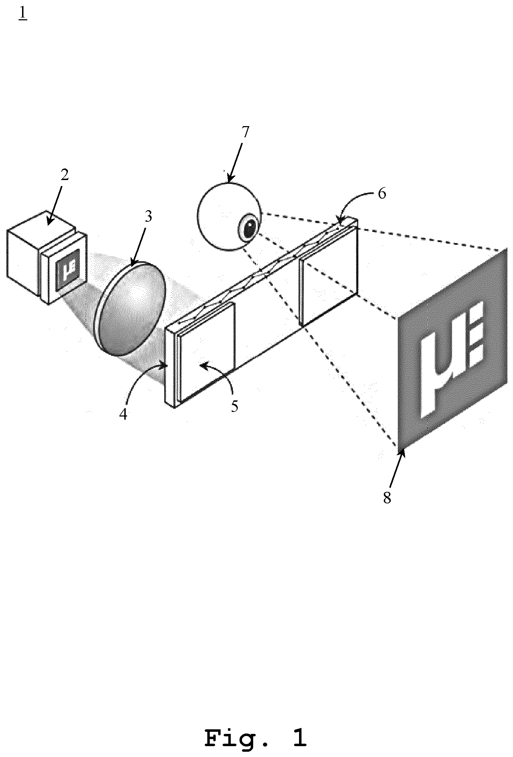

In Fig. 1, the general working principle of an augmented reality optics is illustrated. The arrangement 1 typically comprises an emitter 2 that emits an image to be projected. Such an emitter can be realized in the form of organic light emitting diode, quantum light emitting diode, micro-light emitting diode and the like. In addition, liquid crystal on silicon (LCOS) with LED light illumination, digital light processing (DLP) with LED light illumination and Laser scanning are examples of reflective displays with an illumination source operating in color sequences. The beam emitted from the emitter 1 is collimated via a lens 3 onto a glass plate 4, effectively splitting the incident beam via beam splitters 5.

As such, at each incident region, the glass plate 4 acts on both transmit mode and reflect mode. The beam 6 within the glass plate 4 traverses in a slander fashion due to total internal reflection and eventually split out from the glass plate 4 via beam splitters **5.** A viewer 7 in line with the split out beam therefore can see the virtual image 8 of the actual image that is being emitted by the emitter **2.**

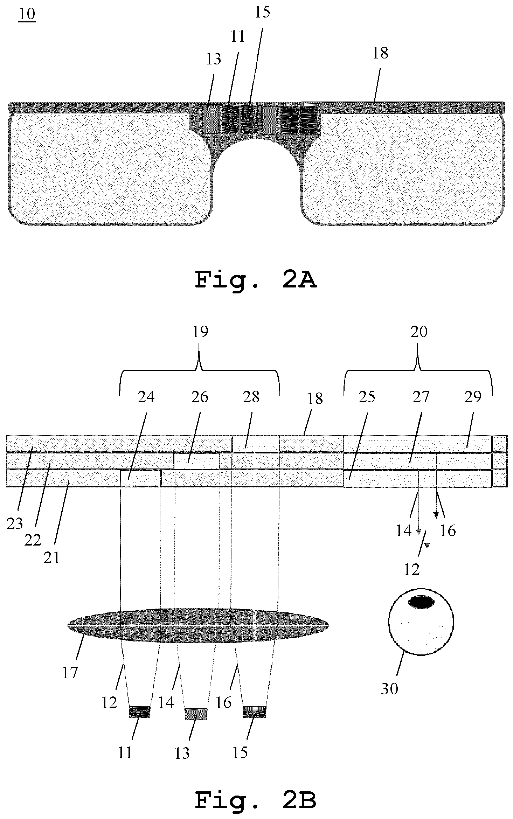

Along Fig. 2A and 2B, an exemplary embodiment of the system 10 is illustrated not according to the claimed invention. In Fig. 2A, the display system 10 is implemented for augmented reality glasses, where three separate display dies 11,13,15 are integrated on an optical waveguide system 18 acting as a beam combiner. In Fig. 2B, it can be seen that the three separate display dies 11,13,15 emit light of respective colors 12,14,16. For instance, the first display die 11 may emit light of red color 12, the second display die 13 may emit light of blue color 14, and the third display die 15 may emit light of green color 16.

The system 10 comprises a lens system 17, which can be implemented as a common lens system for the three separate display dies 11,13,15 or as an array of multiple lens respective to each display die 11,13,15. In either case, the lens system 17 collimates the lights onto the optical waveguide system 18. In particular, the optical waveguide system 18 has a first grating portion 19 that acts as an in-coupler and a second grating portion 20 that acts as an out-coupler for the incident and transmitted lights, respectively.

As can be seen in Fig. 2B, the optical waveguide system 18 is shown as three separate waveguides 21,22,23 for each color 12,14,16 attached above each other. Each separate waveguide 21,22,23 has a separate in-coupling area 24,26,28 and a separate out-coupling area 25,27,29 for each color 12,14,16. The waveguide grating can be based on surface grating, for instance, surface relief grating in order to achieve beam diffraction for the incident and transmitted lights.

It is also conceivable that the optical waveguide system 18 may comprise only two separate waveguides for two colors and the third color can be split or combined with one of the two. For instance, the two separate waveguide can be implemented for the red color and the blue color. The green color can be either split between both waveguides or combined with one of the two. It is further conceivable that the optical waveguide system 18 may comprise only one waveguide, for instance, by means of volumetric holographic gratings provided by holographic optical elements or via surface microstructures at the coupling portions on the waveguide, thereby forming a single diffractive waveguide for all three colors 12,14,16.

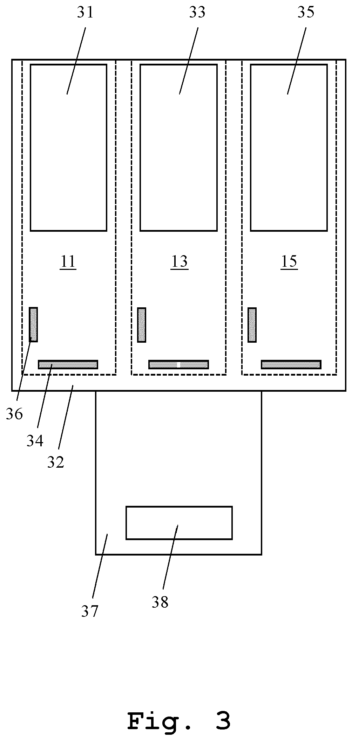

In Fig. 3, an exemplary arrangement of the display dies 11,13,15 on a single package is illustrated not according to the claimed invention. In particular, the display dies 11,13,15 are arranged on a rigid package that facilitates the implementation of a single collimating lens 17 as explained above. Preferably, each display die 11,13,15 comprises arrays of microscopic light emitting diodes forming the individual pixel elements. As such, each display die 11,13,15 has a respective emission area 31,33,35 that comprises the individual pixel elements.

In addition, each display die 11,13,15 comprises driver circuitry 34,36 including a plurality of pixel driver circuits, preferably distributed along two axes.

Particularly, the driver array 34 that is distributed along the horizontal axis with respect to the die position may act as source driver and the driver array 36 that is distributed along the vertical axis with respect to the die position may act as gate driver for the respective pixel elements. The package is preferably realized on a PCB 32 where the separate dies 11,13,15 are arranged in close proximity.

Preferably, the three display dies 11,13,15 are fabricated with different compound semiconductors. For instance, the display die 11 corresponding to red color 12 may be fabricated with Aluminum Gallium Indium Phosphide (AlGaInP), the display die 13 corresponding to blue color 14 as well as the display die 15 corresponding to green color 16 may be fabricated with Indium Gallium Nitride (InGaN). The package includes a non-volatile memory 38, e.g., a flash memory that can be used to store calibration data and images. Especially, the flash memory 38 stores optical and electrical calibration data for each pixel and may store additional pixel offset data generated by the proposed offset calibration schemes as described later, if required. A connector 37, e.g., a flex-connector is also provided in order to communicate with the display dies 11,13,15 resp. the PCB package 32.

It is advantageous that the three separate display dies 11,13,15 (in short: RGB dies) are combined in one package and the respective light 12,14,16 (in short: RGB light) is collimated with the lens system 17 and coupled into the optical waveguide system 18. At respective out-coupling portion, the respective light 12,14,16 is coupled out within the field of view of an observer 30. Any misalignment between the RGB dies 11,13,15 to each other typically arises from the packing into one package. Standard flip-chip technology allows a die placement with an accuracy of 60 micrometers bondpad pitch on a printed circuit board (PCB) or within a package. Advanced products using die-to-wafer flip-chip bonding may achieve a bonding accuracy to a bondpad pitch down to 10-20 micrometers in production. If an assumption is made for a target pitch of a micro-LED display of about 3 micrometers, a misplacement of 3-30 pixels of the RGB light can be anticipated as it couples out of the waveguide.

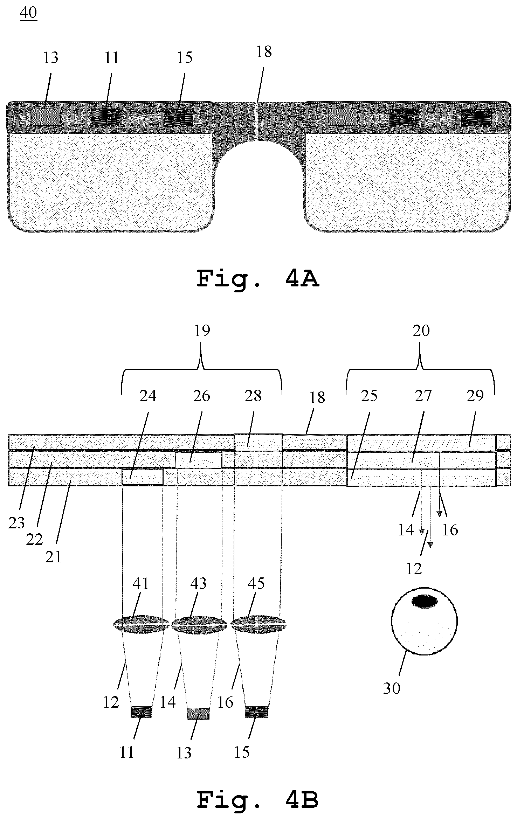

Along Fig. 4A and Fig. 4B, a first exemplary embodiment of the system 40 is illustrated not according to the claimed invention. The system 40 differs from the system 10 of Fig. 2A in that additional measures have been taken into consideration in the system 40 so that the separate display dies 11,13,15 can be placed with higher flexibility across the optical waveguide system 18 to allow a better form-factor. Particularly, it can be seen from Fig. 4B that the system 40 comprises three separate lenses, namely a first lens 41, a second lens 43 and a third lens 45, instead of a common single lens 17 as illustrated in Fig. 2B for beam collimation.

As such, the light of first color 12 emitted from the first display die 11 is collimated by the first lens 41 onto the first grating portion 24 of a waveguide 21 of the optical waveguide system 18. Similarly, the light of second color 14 emitted from the second display die 13 is collimated by the second lens 43 onto the first grating portion 26 of a waveguide 22 of the optical waveguide system 18. Further, the light of third color 16 emitted from the third display die 15 is collimated by the third lens 45 onto the first grating portion 28 of a waveguide 23 of the optical waveguide system 18.

Advantageously, the separate display dies 11,13,15 are arranged in separate packages. Thus, each display die 11,13,15 can be separately placed with an own lens 41,43,45 onto the optical waveguide system 18. Due to the compact size of the lenses 41,43,45 compared to the common lens system 17 of Fig. 2B, the display dies 11,13,15 can be placed across the optical waveguide system 18 with a greater flexibility.

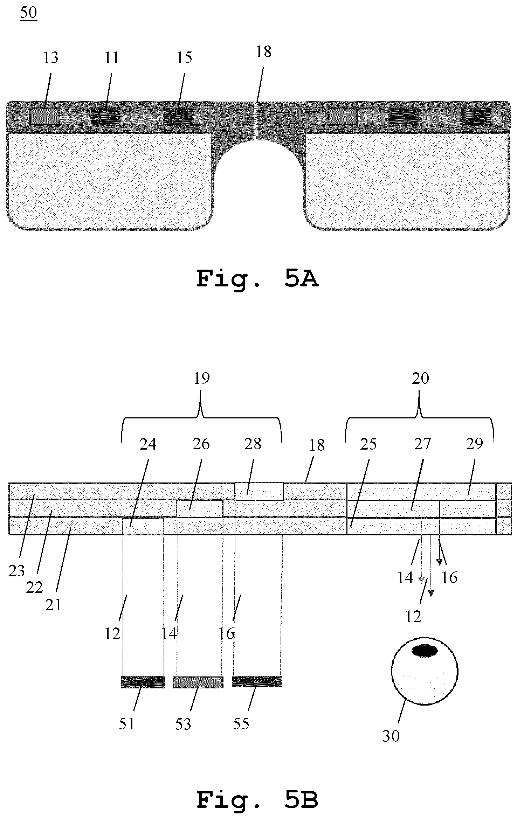

Along Fig. 5A and 5B, a second exemplary embodiment of the system 50 is illustrated not according to the claimed invention. The system 50 differs from the system 40 of Fig. 4B in that the first display die 51, the second display die 53 and the third display die 55 are adapted to emit the light of first color 12, the light of second color 14 and the light of third color 16 respectively, which are already collimated. As such, the first display die 51 corresponds to the first display die 11 and the respective first lens 41. Similarly, the second display die 53 corresponds to the second display die 13 and the respective second lens 43. Further, the third display die 55 corresponds to the third display die 15 and the respective third lens 45.

The combined effect of light emission and collimation (whereby every pixel is collimated but not necessarily all pixel emit with the same emission angle) can be achieved by integrating wafer level lens onto the packaging of the separate display dies 51,53,55. It is also conceivable that the first display die 51, the second display die 53 and the third display die 55 can be realized in form of a display that already emits collimated light, i.e., light emission with the same emission angle, in order to achieve the collimation effect. It is further conceivable that the first display die 51, the second display die 53 and the third display die 55 may comprise arrays of microscopic light emitting diodes with resonant cavity in order to achieve the collimation effect.

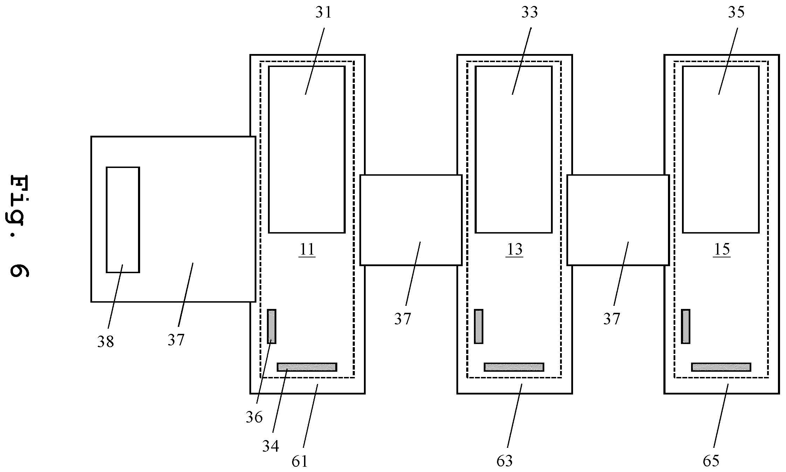

In Fig. 6, an exemplary arrangement of the display dies 11,13,15 on separate packages is illustrated not according to the claimed invention. Although the display dies 11,13,15 are referred herein as the display dies 11,13,15 of Fig. 4B, it is to be understood that the said arrangement is also compatible for the display dies 51,53,55 of Fig. 5B. Similar to Fig. 3, the first display die 11, the second display die 13 and the third display die 15 comprise arrays of microscopic light emitting diodes forming the individual pixel elements. As such, each display die 11,13,15 has a respective emission area 31,33,35 that comprises the individual pixel elements.

In addition, each display die 11,13,15 comprises driver circuitry 34,36 including a plurality of pixel driver circuits, preferably distributed along two axes.

Particularly, the driver array 34 that is distributed along the horizontal axis with respect to the die position may act as source driver and the driver array 36 that is distributed along the vertical axis with respect to the die position may act as gate driver for the respective pixel elements.

As it can be seen in Fig. 6, the first display die 11 is arranged on a first PCB package 61, the second display die 13 is arranged on a second PCB package 63 and the third display die 15 is arranged on a third PCB package 65. Thus, the separate display dies 11,13,15 are arranged on separate packages 61,63,65 in order to facilitate the implementation of three separate respective lenses 41,43,45, thereby allowing a much relaxed positioning of the display dies 11,13,15 as explained above. The separate display dies 11,13,15 are interconnected via a connector 37, e.g., a flex-connector, which further connects the display dies 11,13,15 to a power source, an external graphic processor or/and an additional non-volatile memory 38 containing calibration data, **e.g.,** a flash memory.

As mentioned above, the integration of separate display dies 11,13,15 onto an optical waveguide system 18 would raise misalignments due to process and equipment limitations, especially between 10-100 micrometers in the packaging and placement process of the display dies 11,13,15 with the waveguide system 18. In order to calibrate those misalignments away after the assembly process, the invention proposes two calibration methods based on the depth system design modifications. In both cases, the misalignments or offsets are measured optically after the assembly process and are stored in the memory, **e.g.,** the flash memory 38, as calibration data.

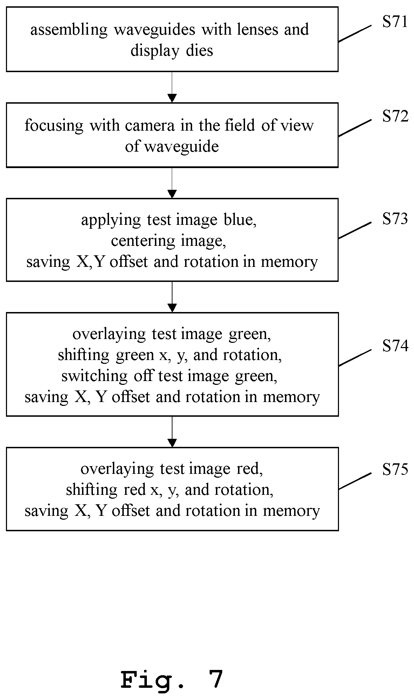

In Fig. 7, exemplary calibration sequences are illustrated in order to determine misalignments or offsets. It is to be noted that the calibration sequences are applicable for all display systems 10,40,50 described along Fig. 2B, Fig. 4B and Fig. 5B respectively. In order to initiate the sequences, the separate display dies 11,13,15 are assembled onto the optical waveguide system 18 along with the lens system 17 or separate respective lenses 41,43,45, and a high-resolution camera is placed in the eye box position 30.

Thus, in a first step S71, the optical waveguide system 18 with lens system 18 or lenses 41,43,45 and the separate display dies 11,13,15 are assembled. In a second step S72, the high-definition camera is focused in the field of view of the optical waveguide system 18. In a third step S73, a calibration image or pattern is applied for the display die 13, i.e., the second display die 13, which is adapted to emit the image in blue color 14. The image is then centered with respect to the dimension of the second display die 13. The optically measured offset along the horizontal axis X and along the vertical axis Y of the second display die 13 is stored as well as the relative transversal and rotational offsets in the flash memory 38.

In a subsequence fourth step S74, the calibration image is further applied for the display die 15, i.e., the third display die 15, which is adapted to emit the image in green color 16, and is overlaid onto the second display die 13 of the previous step S73. The green image is shifted along the horizontal axis x and the vertical axis y with respect to the third display die 15 until the green image overlaps with the blue image. Then, the green image is switched off, and the optically measured offset along the horizontal axis X and along the vertical axis Y of the second display die 13 is stored as well as the relative transversal and rotational offsets in the flash memory 38.

Finally, in a fifth step S75, the calibration image is further applied for the display die 11, i.e., the first display die 11, which is adapted to emit the image in red color 12, and is overlaid onto the second display die 13 of the step S73. The red image is shifted along the horizontal axis x and the vertical axis y with respect to the first display die 11 until the red image overlaps with the blue image. Then, the optically measured offset along the horizontal axis X and along the vertical axis Y of the second display die 13 is stored as well as the relative transversal and rotational offsets in the flash memory 38.

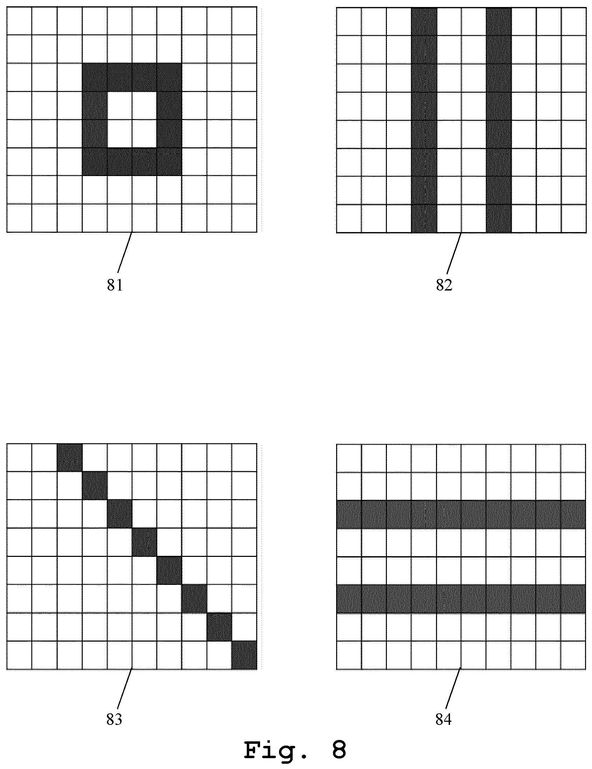

In Fig. 8, exemplary calibration patterns or images are illustrated in order to determine misalignments. On top left of Fig. 8, a calibration pattern 81 of a hollow square is shown, which is aligned at the center of the display dimensions. On top right of Fig. 8, a calibration pattern 82 of two parallel vertical lines is shown, which are aligned at the center with respect to the horizontal dimension of the display. Furthermore, on bottom left of Fig. 8, a calibration pattern 83 of a diagonal line is shown, which is aligned at the center with respect to the horizontal dimension of the display, starting from the left top corner to the right bottom corner of the display. Finally, on bottom right of Fig. 8, a calibration pattern 84 of two parallel horizontal lines is shown, which are aligned at the center with respect to the vertical dimension of the display.

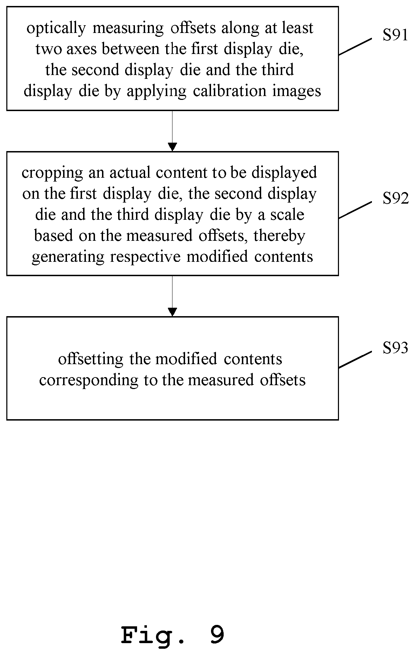

In Fig. 9, an exemplary embodiment of the method according to the invention is illustrated. In a first step S91, offsets along at least two axes between the first display die, the second display die and the third display die are optically measured by applying calibration images. In a second step S92, an actual content to be displayed on the first display die, the second display die and the third display die is cropped by a scale based on the measured offsets, thereby generating respective modified contents. Finally, in a third step S93, the modified contents are offset corresponding to the measured offsets.

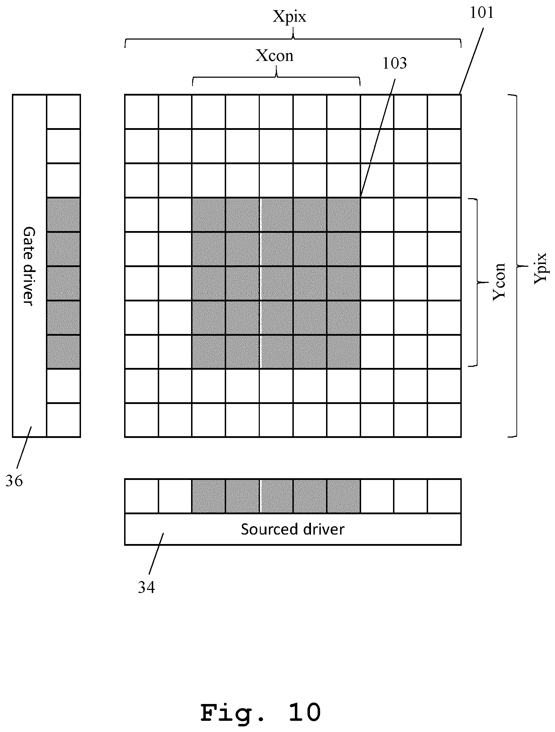

In Fig. 10, an exemplary active matrix addressing of display according to the invention is illustrated. The main advantage of this calibration method is that no change in the driver or display design is required and all calibration is done as a software implementation in the external graphic (GPU) and computation (CPU) hardware. Generally, the data stream from the GPU is in a standard video stream format, e.g., Mobile Industry Processor Interface (MIPI), High-Definition Multimedia Interface (HDMI), and so on. These are configured for a defined frame output format, e.g., a Full High-Definition (FHD) 1920x1280x3, a VGA, 4K2K, etc. with a defined frame rate, e.g., 60 frames per seconds, 120 frames per seconds, and so on, and a defined grey level depth per color, e.g., 8 bit, 12 bit, 16 bit, and the like.

In order to calibrate the output of three separate display dies 11,13,15 (i.e., RGB dies), which are overlapping pixel by pixel, the calibration method foresees the reduction of frame size (i.e., cut away) of the actual content to be shown and offset in the software the misalignment. For instance, Fig. 10 shows a display 101 with the frame size 10x10 pixels, i.e., a horizontal dimension Xpix of 10 pixels and a vertical dimension Ypix of 10 pixels. Fig. 10 further shows the driver circuitry, especially the source driver 34 and the gate driver 36 to drive each respective pixel elements of the display 101.

For this example, it is considered that the measured misalignment, e.g., obtained from the calibration sequence described along Fig. 7, is 2.5 pixels along the vertical axis, i.e., dX, and is 2.5 pixels along the horizontal axis, i.e., dY. In order to calibrate the misalignments away, the actual shown content is cropped to 5x5 pixels whereby all other pixels are set off. This results in the modified content 103, having a horizontal dimension Xcon of 5 pixels and a vertical dimension Ycon of 5 pixels. For every frame that is sent from the GPU to the display 101, the computation is performed to satisfy that the actual content is cropped and the modified content 103 is offset by a dX,dY value for every color corresponding to the actual measured offset between the RGB dies 11,13,15.

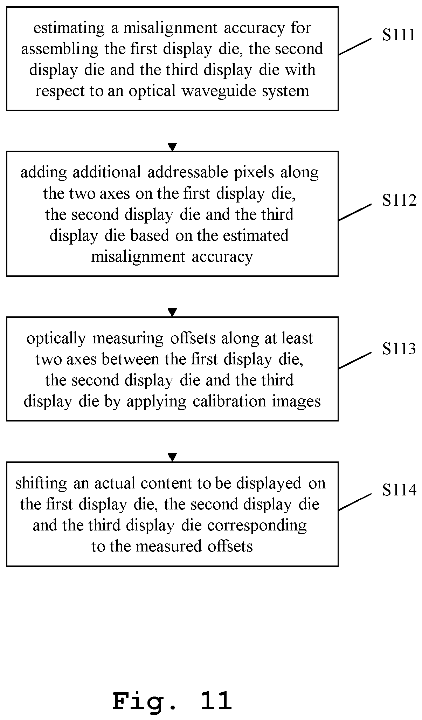

In Fig. 11, an exemplary embodiment of the method is illustrated not according to the claimed invention. In a first step S111, a misalignment accuracy is estimated for assembling the first display die, the second display die and the third display die with respect to an optical waveguide system. In a second step S112, additional addressable pixels are added along the two axes on the first display die, the second display die and the third display die based on the estimated misalignment accuracy. In a third step S113, offsets along at least two axes between the first display die, the second display die and the third display die are optically measured by applying calibration images. Finally, in a fourth step S114, an actual content to be displayed on the first display die, the second display die and the third display die is shifted corresponding to the measured offsets.

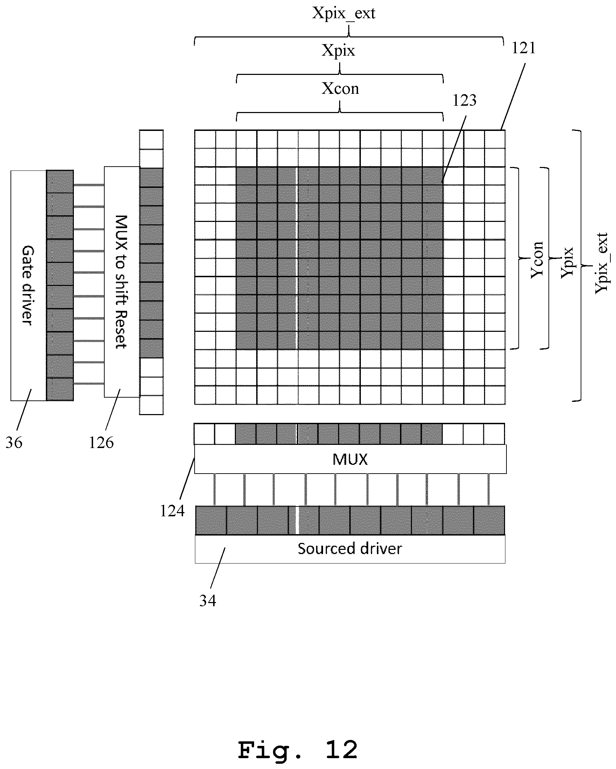

In Fig. 12, an exemplary active matrix addressing of display is illustrated not according to the claimed invention. The calibration method requires changes in display and display driver design and all calibration is done within the display module for itself. It is assumed that the standard frame size of the intended data format is 10x10 pixels, i.e., the horizontal dimension Xcon of the actual content 123 is 10 pixels and the vertical dimension Ycon of the actual content 123 is 10 pixels. The source driver 34 and the gate driver 36 are present in order to address their respective pixel elements.

For this example, it is considered that the measured misalignment, e.g., obtained from the calibration sequence described along Fig. 7, is 2.5 pixels along the vertical axis, i.e., dX, and is 2.5 pixels along the horizontal axis, i.e., dY. In order to calibrate the misalignments away, 5 additional pixels are added along the horizontal axis X and the vertical axis Y of the display 121, that result in an extended display 121 with a horizontal dimension of:

$$\mathtt{Xpix\_ext = X + 2 \ . \ dX}$$

and a vertical dimension of:

$$\mathtt{Ypix\_ext = Y + 2 \ . \ dY}$$

Therefore, it is required to add modified gate driver and modified source driver respect to the Xpix_ext and Ypix_ext for the larger size display 121. Since the actual content 123 is smaller, it is undesirable to drive and update the full display. Hence, only the section that contains the actual data content 123 is driven and updated in order to avoid additional flicker caused by the drive circuits 34,36.

In order to modify the source driver 34 and the gate driver 36, respective specific multiplexers 126,126 are implemented. Particularly, the multiplexer 126 implemented to the source driver 34 simply shifts which pixels get which data content. On the gate driver 36 side, the multiplexer 126 is configured to shift the reset signal to the first shift register that gets actually activated and comprises a separate counter to reset after the horizontal pixel lines, e.g., 10 pixels, are addressed.

Although not shown in the active matrix addressing scheme of Fig. 12, it is conceivable that the driver circuit array (34,36), especially the source driver 34 and the gate driver 36 are further extended to comprises power gating means, e.g. a power-gate transistor between the source driver 34 and the gate driver 36. By power gating of said power-gate transistors, a full row and/or column of pixels of the display 121 can be deactivated.

The calibration method according to the invention is more cost-effective than the method of Fig. 11. However, the calibration method of Fig. 11 is more effective with respect to performance and image rendering than the method according to the invention. Nonetheless, both calibration methods relax the requirements for the placement and bonding accuracy of the RGB dies to each other and the waveguide to more realistic values that can be implemented in production.

The embodiments of the present invention can be implemented by hardware, software, or any combination thereof. Various embodiments of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

**Claims**

1. A method for calibrating a display system with a first display die (11), a second display die (13) and a third display die (15) with a driver circuit array (34,36) comprising the steps of:

   optically measuring offsets along at least two axes between the first display die (11), the second display die (13) and the third display die (15) by applying calibration images, cropping an actual content to be displayed on the first display die (11), the second display die (13) and the third display die (15) by a scale based on the measured offsets, thereby generating respective modified contents, and offsetting the modified contents corresponding to the measured offsets.

2. The method according to claim 1,

   wherein the method further comprises the steps of:
   optically measuring rotational offsets between the first display die (11), the second display die (13) and the third display die (15), and offsetting the modified contents corresponding to the measured rotational offsets.

**Patentansprüche**

1. Ein Verfahren zum Kalibrieren eines Anzeigesystems mit einem ersten Anzeigechip (11), einem zweiten Anzeigechip (13) und einem dritten Anzeigechip (15) mit einer Treiberschaltungsanordnung (34, 36), aufweisend die folgenden Schritte:

   optisches Messen von Versätzen entlang zumindest zweier Achsen zwischen dem ersten Anzeigechip (11), dem zweiten Anzeigechip (13) und dem dritten Anzeigechip (15) durch Anwenden von Kalibrierungsbildern, Zuschneiden eines eigentlichen, auf dem ersten Anzeigechip (11), dem zweiten Anzeigechip (13) und dem dritten Anzeigechip (15) anzuzeigenden Inhalts, um ein gewisses, auf den gemessenen Versätzen basierendes Maß, wodurch jeweilige modifizierte Inhalte erzeugt werden, und Versetzen der modifizierten Inhalte entsprechend den gemessenen Versätzen.

2. Das Verfahren nach Anspruch 1, wobei das Verfahren ferner die folgenden Schritte aufweist:

   optisches Messen von Rotationsversätzen zwischen dem ersten Anzeigechip (11), dem zweiten Anzeigechip (13) und dem dritten Anzeigechip (15), und Versetzen der modifizierten Inhalte entsprechend den gemessenen Rotationsversätzen.

**Revendications**

1. Un procédé pour calibrer un système d'affichage avec une première puce d'affichage (11), une deuxième puce d'affichage (13) et une troisième puce d'affichage (15) avec un réseau de circuits d'attaque (34, 36), comportant les étapes consistant à :

   mesurer optiquement des décalages le long d'au moins deux axes entre la première puce d'affichage (11), la deuxième puce d'affichage (13) et la troisième puce d'affichage (15) en appliquant des images de calibrage, recadrer un contenu réel à afficher sur la première puce d'affichage (11), la deuxième puce d'affichage (13) et la troisième puce d'affichage (15) par une échelle basée sur les décalages mesurés, en générant ainsi des contenus modifiés respectifs, et décaler les contenus modifiés correspondant aux décalages mesurés.

2. Procédé selon la revendication 1, dans lequel le procédé comporte en outre les étapes consistant à :

   mesurer optiquement des décalages rotatifs entre la première puce d'affichage (11), la deuxième puce d'affichage (13) et la troisième puce d'affichage (15), et décaler les contenus modifiés correspondant aux décalages rotatifs mesurés.

Fig. 1

Fig. 2A

Fig. 2B

31    33    35

11    13    15

36
34
32

37    38

Fig. 3

40

13    11    15        18

Fig.  4A

19                              20

24    26    28    18    25    27    29

23
22
21

41    43    45

12    14    16    14    16

11    13    15        12

30

Fig.  4B

50

13  11  15  18

Fig. 5A

19

20

24  26  28  18  25  27  29

23  22  21

12  14  16

14  16

12

51  53  55

30

Fig. 5B

Fig. 6

assembling waveguides with lenses and display dies — S71

focusing with camera in the field of view of waveguide — S72

applying test image blue,
centering image,
saving X,Y offset and rotation in memory — S73

overlaying test image green,
shifting green x, y, and rotation,
switching off test image green,
saving X, Y offset and rotation in memory — S74

overlaying test image red,
shifting red x, y, and rotation,
saving X, Y offset and rotation in memory — S75

Fig. 7

Fig. 8

optically measuring offsets along at least
two axes between the first display die,
the second display die and the third
display die by applying calibration images

S91

cropping an actual content to be displayed
on the first display die, the second display
die and the third display die by a scale
based on the measured offsets, thereby
generating respective modified contents

S92

offsetting the modified contents
corresponding to the measured offsets

S93

# Fig. 9

Xpix

Xcon

103

101

Gate driver

36

Ycon

Ypix

Sourced driver

34

# Fig. 10

```
┌─────────────────────────────────┐
│  estimating a misalignment accuracy for      │
│  assembling the first display die, the second  │        S111
│  display die and the third display die with    │
│  respect to an optical waveguide system        │
└─────────────────────────────────┘
                    │
                    ▼
┌─────────────────────────────────┐
│  adding additional addressable pixels along    │
│  the two axes on the first display die,        │
│  the second display die and the third          │        S112
│  display die based on the estimated            │
│  misalignment accuracy                         │
└─────────────────────────────────┘
                    │
                    ▼
┌─────────────────────────────────┐
│  optically measuring offsets along at least    │
│  two axes between the first display die,       │
│  the second display die and the third          │        S113
│  display die by applying calibration images    │
└─────────────────────────────────┘
                    │
                    ▼
┌─────────────────────────────────┐
│  shifting an actual content to be displayed on │
│  the first display die, the second display die │        S114
│  and the third display die corresponding       │
│  to the measured offsets                       │
└─────────────────────────────────┘
```

Fig. 11

Fig. 12

**EP 4 014 076 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10032757 B2
- US 20170299860 A1
- US 20180017801 A1
- EP 2887128 A1
- WO 2018175653 A1
- US 20190227319 A1
- US 20150234477 A1